(19) **Europäisches Patentamt**
**European Patent Office**
**Office européen des brevets**

(11) **EP 4 418 065 A1**

(12) **EUROPEAN PATENT APPLICATION**
published in accordance with Art. 153(4) EPC

(43) Date of publication:
**21.08.2024 Bulletin 2024/34**

(21) Application number: **23870671.7**

(22) Date of filing: **25.09.2023**

(51) International Patent Classification (IPC):
***G05D 1/20*** (2024.01)

(52) Cooperative Patent Classification (CPC):
**G05D 1/495**

(86) International application number:
**PCT/CN2023/120933**

(87) International publication number:
**WO 2024/067440 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 CN 202211208634**

(71) Applicant: **Tencent Technology (Shenzhen) Company Limited**
**Shenzhen, Guangdong, 518057 (CN)**

(72) Inventor: **ZHANG, Jingfan**
**Guangdong 518057 (CN)**

(74) Representative: **Sadler, Peter Frederick**
**Reddie & Grose LLP**
**The White Chapel Building**
**10 Whitechapel High Street**
**London E1 8QS (GB)**

(54) **TWO-WHEELED ROBOT CONTROL METHOD AND APPARATUS, MEDIUM, PROGRAM, AND ROBOT**

(57) A two-wheeled robot control method and apparatus, a medium, a program, and a robot. The method comprises: calculating an optimal feedback gain, an optimal variable matrix, and an uncertainty according to a first state variable and a first feedback gain of a two-wheeled robot, the optimal variable matrix being used for representing the degree of gain of the motion state of the two-wheeled robot to a control mode of the two-wheeled robot; calculating an angle deviation matrix and a noise deviation matrix according to the optimal feedback gain, the optimal variable matrix, the uncertainty, and a second state variable of the two-wheeled robot; obtaining a control torque of the two-wheeled robot according to the second state variable, the optimal feedback gain, the angle deviation matrix, and the noise deviation matrix; and controlling the two-wheeled robot according to the control torque.

Obtain a first state variable and a first feedback gain of a two-wheeled robot, and calculate an optimal feedback gain, an optimal variable matrix, and an uncertainty degree based on the first state variable and the first feedback gain, the optimal variable matrix representing a degree a state of the two-wheeled robot affects a control mode of the two-wheeled robot — 302

Calculate an angle deviation matrix and a noise deviation matrix based on the optimal feedback gain, the optimal variable matrix, the uncertainty degree, and a second state variable of the two-wheeled robot — 304

Obtain a control torque of the two-wheeled robot based on the second state variable, the optimal feedback gain, the angle deviation matrix, and the noise deviation matrix — 306

Control the two-wheeled robot by using the control torque — 308

FIG. 3

**Description**

RELATED APPLICATION

This application claims priority to Chinese Patent Application No. 202211208634.7, filed with the China National Intellectual Property Administration on September 30, 2022 and entitled "TWO-WHEELED ROBOT CONTROL METHOD AND APPARATUS, MEDIUM, PROGRAM, AND ROBOT".

FIELD OF THE TECHNOLOGY

This application relates to the field of artificial intelligence technologies, and in particular to control of a two-wheeled robot.

BACKGROUND OF THE DISCLOSURE

Two-wheeled robots include a balance car, a two-wheeled wheel-legged robot, a two-wheeled robot with another upper body form (a humanoid form), and the like. Therefore, how to maintain balance of a two-wheeled robot in a stationary state is a subject worth studying.

To ensure that a two-wheeled robot maintains balance in a stationary state, in the related art, a form of the two-wheeled robot is collected by a sensor, and a center of mass of the two-wheeled robot is estimated through the form of the two-wheeled robot. Then a pitch angle and a linear speed of the two-wheeled robot are adjusted according to a motor torque of the wheels, to make a line connecting the center of mass of the two-wheeled robot and a center between the wheels perpendicular to the ground, so that the balance of the two-wheeled robot in a stationary state can be ensured.

However, due to changes of operating conditions (such as changes of a self-structure, an external environment, and load) and state estimation errors (such as center estimation errors and sensor installation errors), a balance controller cannot maintain optimality of an initial design during operation, and consequently, a balance effect is affected.

SUMMARY

Embodiments of this application provide a two-wheeled robot control method and apparatus, a medium, a program, and a robot. According to the method, a two-wheeled robot can remain stationary in a balance state. The technical solutions are as follows.

According to an aspect of this application, a two-wheeled robot control method is provided, including:

obtaining a first state variable and a first feedback gain of a two-wheeled robot;

calculating an optimal feedback gain, an optimal variable matrix, and an uncertainty degree based on the first state variable and the first feedback gain, the optimal variable matrix representing a degree that a motion state of the two-wheeled robot affects a control mode of the two-wheeled robot;

calculating an angle deviation matrix and a noise deviation matrix based on the optimal feedback gain, the optimal variable matrix, the uncertainty degree, and a second state variable of the two-wheeled robot;

obtaining a control torque of the two-wheeled robot based on the second state variable, the optimal feedback gain, the angle deviation matrix, and the noise deviation matrix; and

controlling the two-wheeled robot by using the control torque.

According to an aspect of this application, a two-wheeled robot control apparatus is provided, including:

an obtaining module, configured to obtain a first state variable and a first feedback gain of a two-wheeled robot;

a calculation module, configured to calculate an optimal feedback gain, an optimal variable matrix, and an uncertainty degree based on the first state variable and the first feedback gain, the optimal variable matrix representing a degree that a motion state of the two-wheeled robot affects a control mode of the two-wheeled robot;

the calculation module being further configured to calculate an angle deviation matrix and a noise deviation matrix based on the optimal feedback gain, the optimal variable matrix, the uncertainty degree, and a second state variable of the two-wheeled robot; and

the calculation module being further configured to obtain a control torque of the two-wheeled robot based on the second state variable, the optimal feedback gain, the angle deviation matrix, and the noise deviation matrix; and

a control module, configured to control the two-wheeled robot by using the control torque.

According to another aspect of this application, a robot is provided, including a processor configured to load and execute a computer program to implement the two-wheeled robot control method according to the foregoing aspects.

According to another aspect of this application, a computer-readable storage medium is provided, having a computer program stored thereon, the computer program being loaded and executed by a processor to implement the two-wheeled robot control method according to the foregoing aspects.

According to another aspect of this application, a computer program product including a computer program is provided, the computer program product, when running on a computer, causing the computer to perform the two-wheeled robot control method according to the foregoing aspects.

The technical solutions provided in the embodiments of this application have at least the following beneficial effects:

obtaining the optimal feedback gain, the optimal variable matrix, and the uncertainty based on the first state variable and the first feedback gain of the two-wheeled robot; calculating the angle deviation matrix and the noise deviation matrix based on the optimal feedback gain, the optimal variable matrix, the uncertainty, and the second state variable of the two-wheeled robot; then obtaining the control torque of the two-wheeled robot based on the second state variable, the optimal feedback gain, the angle deviation matrix, and the noise deviation matrix; and finally controlling the two-wheeled robot by using the control torque. According to the method, the two-wheeled robot can keep stay in place or move within a small range, so that stability and safety of the two-wheeled robot can be improved.

BRIEF DESCRIPTION OF THE DRAWINGS

FIG. 1 is a schematic diagram of a two-wheeled robot according to an embodiment of this application.

FIG. 2 is a schematic diagram of a two-wheeled robot control system according to an embodiment of this application.

FIG. 3 is a schematic flowchart of a two-wheeled robot control method according to an embodiment of this application.

FIG. 4 is a schematic diagram of a sagittal plane of a two-wheeled robot according to an embodiment of this application.

FIG. 5 is a schematic flowchart of a two-wheeled robot control method according to an embodiment of this application.

FIG. 6 is a curve graph of training data according to an embodiment of this application.

FIG. 7 is a curve graph of training data according to an embodiment of this application.

FIG. 8 is a curve graph of training data according to an embodiment of this application.

FIG. 9 is a curve graph of training data according to an embodiment of this application.

FIG. 10 is a curve graph of training data according to an embodiment of this application.

FIG. 11 is a curve graph of training data according to an embodiment of this application.

FIG. 12 is a curve graph of training data according to an embodiment of this application.

FIG. 13 is a schematic diagram of a two-wheeled robot control apparatus according to an embodiment of this application.

FIG. 14 is a schematic diagram of a structure of a controller according to an embodiment of this application.

DESCRIPTION OF EMBODIMENTS

To make the objectives, technical solutions, and advantages of this application clearer, the following further describes implementations of this application in detail with reference to the accompanying drawings.

In this application, a prompt interface and a pop-up window may be displayed or voice prompt information may be outputted before and during relevant data of a user is collected. The prompt interface, the pop-up window, or the voice prompt information are used for prompting the user that relevant data is collected currently. In this way, in this application, only after a confirmation operation performed by the user on the prompt interface or the pop-up window is acquired, a relevant step of obtaining the relevant data of the user starts, or otherwise (that is, in a case that the confirmation operation performed by the user on the prompt interface or the pop-up window is not acquired), the relevant step of the relevant data of the user ends, that is, the relevant data of the user is not obtained. In other words, in this application, all collected user data are collected with the consent and authorization of users. The collection, use and processing of relevant user data need to comply with the relevant laws, regulations and standards of relevant countries and regions.

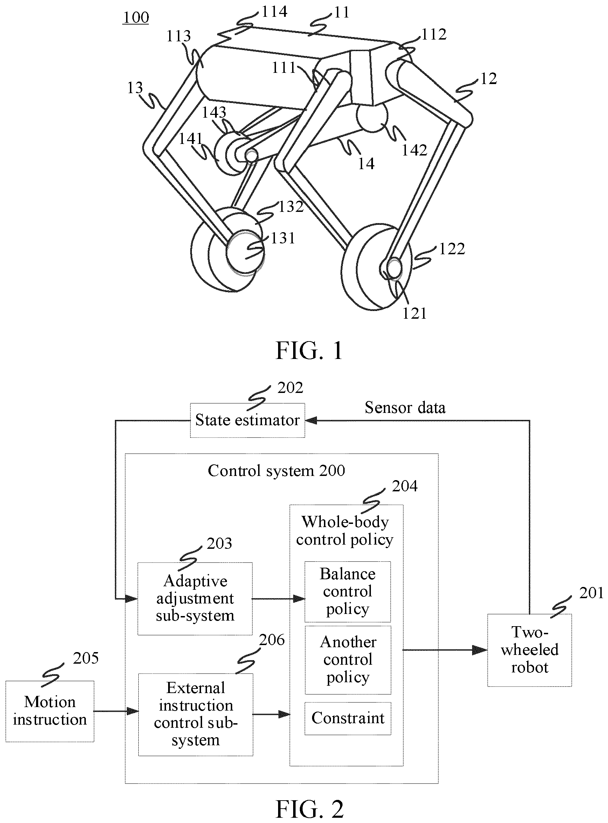

In the embodiments of this application, an example in which a two-wheeled robot is a wheel-legged two-wheeled robot is used for description. FIG. 1 is a schematic diagram of a two-wheeled robot according to an embodiment of this application. The two-wheeled robot 100 includes a base 11, a leg 12, a leg 13, and a tail rod 14.

The base 11 is provided with a controller of the two-wheeled robot. As shown in FIG. 1, the base 11 is provided with a total of four motors, a motor 111, a motor 112, a motor 113, and a motor 114. The motor 111 and the motor 112 drive the leg 12, and the motor 113 and the motor 114 drive the leg 13. In some embodiments, a position of the base 11 may be adjusted by changing a height of the leg 12 and a height of the leg 13, that is, a distance between a wheel center and a leg plane.

The leg 12 is provided with a motor 121, and the motor 121 is configured to drive a wheel 122. In some embodiments, the leg 12 uses a five-bar linkage mechanism to enable the motor 111 and the motor 112 on the base 11 to drive the leg 12, and the leg 12 has no drive on a knee.

The leg 13 is provided with a motor 131, and the motor 131 is configured to drive a wheel 132. In some embodiments, the leg 13 uses a five-bar linkage mechanism to enable the motor 113 and the motor 114 on the base 11 to drive the leg 13, and the leg 13 has no drive on a knee.

The tail rod 14 is provided with a motor 141 and a motor 142. In some embodiments, the motor 141 is configured to drive a wheel 143. In some embodiments, the motor 142 is configured to adjust a form of the tail rod 14. For example, the tail rod 14 has a lifted state and a lowered state. During the tail rod 14 is in the lifted state, the wheel 143 is in a suspended state and not in contact with the ground, and during the tail rod 14 is in the lowered state, the wheel 143 is in contact with the ground. In some embodiments, the two-wheeled robot 100 may be flexibly switches between a two-wheeled mode and a three-wheeled mode by adjusting a state of the wheel 143. In some embodiments, the wheel-legged two-wheeled robot may cross obstacles, jump, and flip. In some embodiments, a height of the wheel-legged two-wheeled robot is between 0.33 m to 0.7 m.

FIG. 1 merely shows an optional form of the two-wheeled robot. The two-wheeled robot in the embodiments of this application may alternatively be another robot with two parallel wheels. An upper body form of the two-wheeled robot is not limited in the embodiments of this application.

FIG. 2 shows a schematic diagram of a two-wheeled robot control system according to an embodiment of this application. The control system 200 includes an adaptive adjustment sub-system 203 and an external instruction control sub-system 206.

A two-wheeled robot 201 obtains sensor data, and generates a state estimator 202 according to the sensor data. In some embodiments, the state estimator 202 includes at least one of a linear speed, a pitch angular velocity, a base height, and a ground slope. The adaptive adjustment sub-system 203 generates a balance control policy according to the state estimator 202, and the balance control policy is used for controlling the two-wheeled robot 201 to maintain balance.

The control system 200 obtains a motion instruction 205. In some embodiments, the motion instruction 205 includes at least one of stepping forward, stepping backward, remaining stationary, jumping, adjusting the base height, and flipping. The external instruction control sub-system 206 generates a motion control policy according to the motion instruction 205.

The control system 200 generates a whole-body control policy 204 according to the balance control policy and the motion control policy. The whole-body control policy 204 is used for controlling the two-wheeled robot 201 to move in a balance state. In some embodiments, the whole-body control policy includes at least one of the balance control policy, another control policy, and a constraint. The another control policy is used for representing a control mode other than controlling the two-wheeled robot 201 to maintain balance. The constraint is used for representing a restriction condition of the two-wheeled robot 201. The control system 200 sends the whole-body control policy 204 to the two-wheeled robot 201, and the two-wheeled robot 201 executes the whole-body control policy 204.

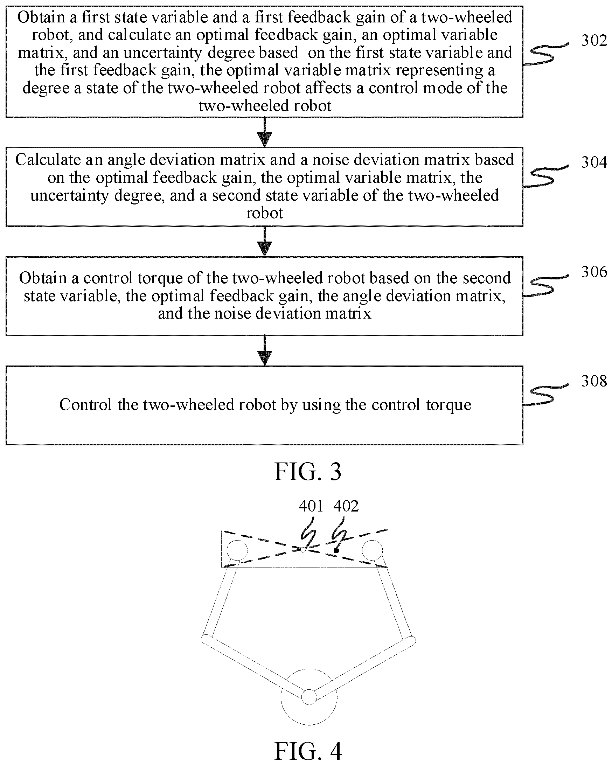

FIG. 3 shows a schematic flowchart of a two-wheeled robot control method according to an embodiment of this application. The method may be performed by a control unit (processor) controlling the two-wheeled robot shown in FIG. 1. The control unit may be disposed inside the two-wheeled robot or outside the two-wheeled robot, which is not limited in this application. In a case that the control unit is disposed inside the two-wheeled robot, the control unit may be used as a control chip of the two-wheeled robot. In a case that the control unit is disposed outside the two-wheeled robot, the control unit is disposed in a control device configured to control the two-wheeled robot.

The method includes the following steps:

**Step 302:** Obtain a first state variable and a first feedback gain of a two-wheeled robot, and calculate an optimal feedback gain, an optimal variable matrix, and uncertainty based on the first state variable and the first feedback gain, the optimal variable matrix representing a degree that a motion state of the two-wheeled robot affects a control mode of the two-wheeled robot.

In the embodiments of this application, a variable matrix is a Lyapunov matrix.

The first state variable characterizes a motion state of the two-wheeled robot measured in a first time period. In some embodiments, the first state variable includes at least one of a pitch angle, a pitch angular velocity, and a linear speed of the two-wheeled robot.

The first feedback gain characterizes a relationship between the motion state and a control matrix for controlling the two-wheeled robot in a balancing system. In an embodiment, in the balancing system, the control matrix of the two-wheeled robot is expressed as $\tau = -K_0\zeta + \beta$, where $K_0$ is the first feedback gain, $\zeta$ is a state variable, and $\beta$ represents a deviation in the motion of the two-wheeled robot. For example, $\beta$ represents a deviation between the control matrix and a product of the state variable and the first feedback gain, and is also referred to as exploration noise. In an embodiment, $\beta$ is a time-related variable $\beta(t)$, $t \in [t_0, t_s]$, and $t_0 < t_s$. In an embodiment, the state variable is the first state variable in a time period $[t_0, t_s]$.

The optimal feedback gain characterizes a relationship between a motion state and a control matrix of the stationary two-wheeled robot in a balancing system.

The uncertainty degree is used for compensating an error of the two-wheeled robot during motion.

**Step 304:** Calculate an angle deviation matrix and a noise deviation matrix based on the optimal feedback gain, the optimal variable matrix, the uncertainty degree, and a second state variable of the two-wheeled robot.

The second state variable is used for representing a state of the two-wheeled robot in a second time period. In some embodiments, the second state variable includes at least one of the pitch angle, the pitch angular velocity, and the linear speed of the two-wheeled robot.

The angle deviation matrix represents a difference between an actual pitch angle and a measured pitch angle of the two-wheeled robot.

The noise deviation matrix represents an ambient noise of the two-wheeled robot.

In some embodiments, in a case that the first state variable is any state variable in the time period $[t_0, t_s]$, the second state variable is any state variable in a second time period in $(t_s, +\infty)$. In a specific example, the first state variable is any state variable in [1, 8], and the second state variable is a state variable in a second time period in $(8, +\infty)$. In this case, in the embodiment of this application, a state variable in a first time period is used as prior experience to determine a control torque of the two-wheeled robot based on a state variable in a second time period, and control the two-wheeled robot in the second time period by using the control torque.

Both the first state variable and the second state variable are state variables of the same type.

**Step 306:** Obtain a control torque of the two-wheeled robot based on the second state variable, the optimal feedback gain, the angle deviation matrix, and the noise deviation matrix.

In some embodiments, a system compensation value is obtained based on the optimal feedback gain, the angle deviation matrix, and the noise deviation matrix, and the control torque of the two-wheeled robot is obtained based on the optimal feedback gain, the second state variable, and the system compensation value.

For example, the system compensation value $L = K^*Z + T$. $K^*$ is the optimal feedback gain, $Z$ is the angle deviation matrix, and $T$ is the noise deviation matrix. In this case, the control torque of the two-wheeled robot is $\tau = -K^*\zeta + L$, and $\zeta$ is the second state variable.

**Step 308:** Control the two-wheeled robot by using the control torque.

In some implementations, as shown in FIG. 1, torques of the motor 111, the motor 112, the motor 113, the motor 114, the motor 121, and the motor 131 are controlled by using the control torque, to enable the two-wheeled robot to remain stationary in a balance state.

In conclusion, in the embodiments of this application, the optimal feedback gain, the optimal variable matrix, and the uncertainty degree are obtained based on the first state variable and the first feedback gain of the two-wheeled robot. The angle deviation matrix and the noise deviation matrix are calculated based on the optimal feedback gain, the optimal variable matrix, the uncertainty degree, and the second state variable of the two-wheeled robot. Then the control torque of the two-wheeled robot is obtained based on the second state variable, the optimal feedback gain, the angle deviation matrix, and the noise deviation matrix. Finally, the two-wheeled robot is controlled by using the control torque. According to the method, the two-wheeled robot can keep stay in place or move within a small range, so that stability and safety of the two-wheeled robot can be improved.

In the following embodiments, the two-wheeled robot is difficult to maintain a completely stationary standing state under different operating conditions. To make the two-wheeled robot maintain stationary, a line connecting a center of mass (COM) and a center between wheels is to be perpendicular to the ground. Therefore, it is important for a controller of the two-wheeled robot to accurately estimate a position of the center of mass. However, due to uneven mass distribution and assembly errors, it is inevitable in practice that the position of the center of mass location deviates from an expected position. This is presented in a sagittal plane in FIG. 4. Theoretically a center of mass of a base is consistent with a geometric center. However, in practice, a center of mass 402 and a geometric center 401 of a base are different.

To resolve the foregoing problems, in a task of balancing the two-wheeled robot, a motor torque $\tau$ of a control wheel needs to be adjusted, so that the pitch angle of the two-wheeled robot remains unchanged, and both the pitch angular velocity and the linear speed are adjusted to 0. In this case, a system included in the two-wheeled robot may be represented by the following equation:

$$\dot{\bar{\zeta}} = A\bar{\zeta} + B\tau, \text{ (1)}$$

$\bar{\zeta} = \begin{bmatrix} \bar{\theta} & \dot{\bar{\theta}} & \dot{\bar{x}} \end{bmatrix}^T$, $A \in \mathbb{R}^{n \times n}$, and $B \in \mathbb{R}^{n \times m}$ (n=3, and m=1). Due to uncertain factors of the robot system, accurate expressions of A and B are difficult to be modeled. Therefore, the accurate expressions of A and B are not applied in the embodiments of this application.

Taking into account deviation of the center of mass, an actual pitch angle $\bar{\theta}$ is a difference between a measured pitch angle $\theta$ and a pitch angle offset $\Delta\theta$, that is, $\bar{\theta} = \theta - \Delta\theta$. There is no deviation between the pitch angular velocity and the linear speed. An actual pitch angular velocity $\dot{\bar{\theta}}$ is equal to a measured pitch angular velocity $\dot{\theta}$, and an actual linear speed $\dot{\bar{x}}$ is equal to a measured linear speed X, that is, $\dot{\bar{\theta}} = \dot{\theta}$, and $\dot{\bar{x}} = \dot{x}$. In this case, the following equation is obtained:

$$\dot{\zeta} = A\zeta + B\tau + D, \text{ (2)}$$

$\zeta = \begin{bmatrix} \theta & \dot{\theta} & \dot{x} \end{bmatrix}^T$, and D=$\bar{D}\Delta\theta$, $\bar{D} = [1\ 0\ 0]^T \in \mathbb{R}^{n \times q}$ (q=1). Because $\Delta\theta$ is unknown, D is also unknown. In addition, to maintain the two-wheeled robot to be stationary in a fixed location, $\dot{x}$ is selected to be an output adjusted to 0, and an error of $\dot{x}$ is:

$$e = C\bar{\zeta} = C\zeta, \text{ (3)}$$

C = [0 0 1].

In the embodiments of this application, the control torque of the two-wheeled robot may be represented as the following form:

$$\tau = -K\zeta + L, \text{ (4)}$$

L=KZ+T, Z= $[\Delta\theta\ 0\ 0]^T$, K is a stable feedback gain, and $K \in \mathbb{R}^{n \times 1}$. In the foregoing equations, the first equation is used for adjusting the motion state $\zeta$ of the two-wheeled robot, and the second equation is used for compensating the uncertainty degree. In a case that the two-wheeled robot is progressive stationary (satisfying $lim_{t\to\infty}\overline{\zeta} = 0$), Z and T can be solved by the following adjustment equations (5) and (6).

$$0=AZ+BT+D, (5)$$

$$0=CZ, (6)$$

Because the unique underactuated dynamics of the two-wheeled robot, the foregoing adjustment equations have a unique solution. This is because for the two-wheeled robot in a stationary state, the motion state of the two-wheeled robot satisfies $\zeta = [\Delta\theta\ 0\ 0]$, and in this case, the control torque of the two-wheeled robot is fixed.

In the embodiments of this application, an optimal solution of the foregoing adjustment equations is represented by solving the following constrained optimization problem of state feedback control:

$$\min \int_0^\infty (\overline{\zeta}^T Q\overline{\zeta} + R\tau^2)dt, (7)$$

$Q \in \mathbb{R}^{n\times n}$ is positive definite, and $R \in \mathbb{R}$. The optimal solution is represented by using an optimal feedback as:

$$K^* = -R^{-1}B^T P^*, (8)$$

P is the foregoing variable matrix.

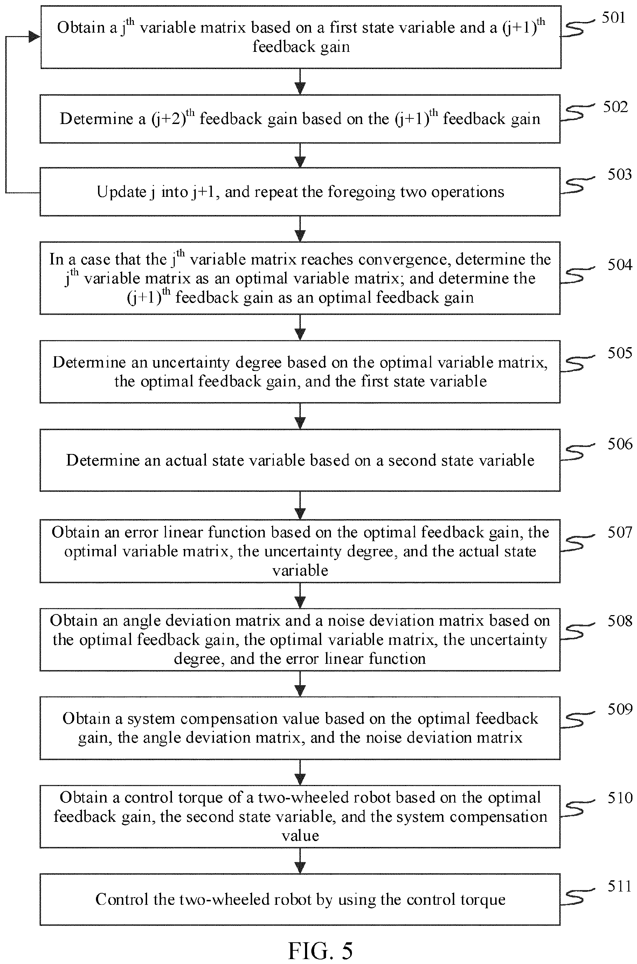

Based on the foregoing argumentation process, FIG. 5 shows a flowchart of a two-wheeled robot control method according to an embodiment of this application. The method may be performed by the two-wheeled robot 100 shown in FIG. 1. The method includes the following steps:

**Step 501:** Obtain a $j^{th}$ variable matrix based on a first state variable and a $(j+1)^{th}$ feedback gain.

The first state variable characterizes a motion state of the two-wheeled robot in a first time period. In some embodiments, the first state variable includes at least one of a pitch angle, a pitch angular velocity, and a linear speed of the two-wheeled robot.

In some embodiments, the step includes the following sub-steps:

1. Determine a first intermediate matrix, a second intermediate matrix, and a third intermediate matrix based on the first state variable.

For example, the first intermediate matrix is denoted as $\Lambda_{\zeta,\zeta}$, the second intermediate matrix is denoted as $\Sigma_{\zeta,\zeta}$, and the third intermediate matrix is denoted as $\Sigma_{\zeta,\tau}$. In this case, there are following equations:

$$\Lambda_{\zeta,\zeta} = \left[\zeta\otimes\zeta|_{t_0}^{t_1}, \zeta\otimes\zeta|_{t_1}^{t_2}, \dots, \zeta\otimes\zeta|_{t_n}^{t_{s-1}}\right]^T, (9)$$

$$\Sigma_{\zeta,\zeta} = \left[\int_{t_0}^{t_1}\zeta\otimes\zeta dt, \int_{t_1}^{t_2}\zeta\otimes\zeta dt, \dots, \int_{t_{s-1}}^{t_n}\zeta\otimes\zeta dt\right]^T, (10)$$

$$\Sigma_{\zeta,\tau} = \left[\int_{t_0}^{t_1}\zeta\otimes\tau dt, \int_{t_1}^{t_2}\zeta\otimes\tau dt, \dots, \int_{t_{s-1}}^{t_n}\zeta\otimes\tau dt\right]^T, (11)$$

$\zeta$ represents the first state variable of the two-wheeled robot, t represents time, and $\tau$ represents a control torque of the two-wheeled robot.

2. Obtain a first polynomial of a first equation based on the $(j+1)^{th}$ feedback gain, the first intermediate matrix, the second intermediate matrix, and the third intermediate matrix.

For example, the first polynomial is denoted as $\Psi \begin{bmatrix} vec(P_j) \\ vec(K_{j+1}) \\ vec(D^T P_j) \end{bmatrix}$ .

$$\Psi = [\Lambda_{\zeta,\zeta} - 2\sum_{\zeta,\zeta}(I_n \otimes K_j^T R) - 2\sum_{\zeta,\tau}(I_n \otimes R) - 2\sum_{\xi,\tau} ]$$ . $I_n$ and $R$ are constant matrices, and $\otimes$ is used for representing a tensor product.

3. Obtain a second polynomial of the first equation based on the (j+1)th feedback gain and the first intermediate matrix.

For example, the second polynomial is denoted as $\Phi$, and $\Phi = -\sum_{\zeta,\zeta} vec(Q + K_j^T R K_j$ ). Q is a constant matrix.

4. In a case that the first polynomial is equal to the second polynomial, solve the first equation to obtain the jth variable matrix.

$$\Psi \begin{bmatrix} vec(P_j) \\ vec(K_{j+1}) \\ vec(D^T P_j) \end{bmatrix} = \Phi$$

For example, the first equation is solved to obtain the jth variable matrix, that is, $P_j$ in the equation.

To ensure that the first equation has a solution, a fourth intermediate matrix is determined based on the first state variable. In a case that the second intermediate matrix, the third intermediate matrix, and the fourth intermediate matrix reach full rank, step 2, to be specific, obtaining a first polynomial of a first equation based on the (j+1)th feedback gain, the first intermediate matrix, the second intermediate matrix, and the third intermediate matrix, is performed.

The fourth intermediate matrix is denoted as $\Sigma_\zeta$. In this case, $\Sigma_\zeta = \left[ \int_{t_0}^{t_1} \zeta dt, \int_{t_1}^{t_2} \zeta dt, \ldots, \int_{t_{s-1}}^{t_n} \zeta dt \right]^T$ . In a case that the second intermediate matrix, the third intermediate matrix, and the fourth intermediate matrix reach full rank, the following equation is satisfied:

$$\text{rank}\left([\sum_{\zeta,\zeta} , \sum_{\zeta,\tau} , \sum_{\zeta} ]\right) = \frac{n(n+1)}{2} + n(m + q) = 12, (12)$$

The first intermediate matrix includes a difference between a tensor product of the first state variable and the first state variable of a first moment and a tensor product of the first state variable and the first state variable of a second moment.

The second intermediate matrix includes an integral of a tensor product of the first state variable and the first state variable between the first moment and the second moment.

The third intermediate matrix includes an integral of a tensor produce of the first state variable and a torque of the two-wheeled robot between the first moment and the second moment.

The fourth intermediate matrix includes an integral of the first state variable between the first moment and the second moment.

The first moment and the second moment are two different sampling values in the first time period.

**Step 502:** Determine a (j+2)th feedback gain based on the (j+1)th feedback gain.

For example, the (j+2)th feedback gain is obtained by using the first equation and the (j+1)th feedback gain.

**Step 503:** Update j into j+1, and repeat the foregoing two steps.

For example, the foregoing two steps 501 to 502 are repeated, until a convergence condition is satisfied.

**Step 504:** In a case that the jth variable matrix reaches convergence, determine the jth variable matrix as an optimal variable matrix; and determine the (j+1)th feedback gain as an optimal feedback gain.

For example, in a case that $\|P_{j+1} - P_j\| < \varepsilon$, and $\varepsilon$ is any positive real number, it is determined that the jth variable matrix reaches convergence.

For example, the optimal variable matrix $P^* = P_j$, and the optimal feedback gain $K^* = K_{j+1}$.

**Step 505:** Determine an uncertainty degree based on the optimal variable matrix, the optimal feedback gain, and the first state variable.

In an embodiment, the uncertainty degree D is determined by using the first equation based on the optimal variable matrix $P^*$, the optimal feedback gain $K^*$, and the first state variable $\zeta$.

**Step 506:** Determine an actual state variable based on a second state variable.

The actual state variable is used for representing an actual state of the two-wheeled robot in a second time period. The second state variable is $\zeta = [\dot{\theta}\ \dot{\theta}\ \dot{x}]^T$, and the actual state variable is $\bar{\zeta} = \begin{bmatrix} \bar{\theta} & \dot{\bar{\theta}} & \dot{\bar{x}} \end{bmatrix}^T$, $\dot{\bar{\theta}} = \dot{\theta}$, $\dot{\bar{x}} = \dot{x}$, and $\bar{\theta} = \theta - \Delta\theta$.

**Step 507:** Obtain an error linear function based on the optimal feedback gain, the optimal variable matrix, the uncertainty degree, and the actual state variable.

In some embodiments, the step includes the following sub-steps:

1. Determine the fourth intermediate matrix, a fifth intermediate matrix, and a sixth intermediate matrix based on the actual state variable.

For example, the fourth intermediate matrix is denoted as $\Lambda_{\hat{\zeta}\hat{\zeta}}$, the fifth intermediate matrix is denoted as $\Sigma_{\hat{\zeta},\hat{\zeta}}$, and the sixth intermediate matrix is denoted as $\Sigma_{\hat{\zeta},\tau}$. In this case, there are following equations:

$$\Lambda_{\hat{\zeta}\hat{\zeta}} = \left[\hat{\zeta} \otimes \hat{\zeta}\big|_{t_0}^{t_1}, \hat{\zeta} \otimes \hat{\zeta}\big|_{t_1}^{t_2}, \dots, \hat{\zeta} \otimes \hat{\zeta}\big|_{t_n}^{t_{s-1}}\right]^T, (13)$$

$$\Sigma_{\hat{\zeta},\hat{\zeta}} = \left[\int_{t_0}^{t_1}\hat{\zeta} \otimes \hat{\zeta}dt, \int_{t_1}^{t_2}\hat{\zeta} \otimes \hat{\zeta}dt, \dots, \int_{t_{s-1}}^{t_n}\hat{\zeta} \otimes \hat{\zeta}dt\right]^T, (14)$$

$$\Sigma_{\hat{\zeta},\tau} = \left[\int_{t_0}^{t_1}\hat{\zeta} \otimes \tau dt, \int_{t_1}^{t_2}\hat{\zeta} \otimes \tau dt, \dots, \int_{t_{s-1}}^{t_n}\hat{\zeta} \otimes \tau dt\right]^T, (15)$$

$\hat{\zeta}$ represents the second state variable of the two-wheeled robot, t represents time, and $\tau$ represents the control torque of the two-wheeled robot.

2. Obtain a third polynomial of a second equation based on the optimal feedback gain, the optimal variable matrix, the uncertainty degree, the fourth intermediate matrix, the fifth intermediate matrix, and the sixth intermediate matrix.

For example, the third polynomial is denoted as $\hat{\Psi}\begin{bmatrix} vec(P^*) \\ vec(K^*) \\ vec((D^T - S(\hat{Z}))P^*) \end{bmatrix}$.

$\hat{\Psi} = [\Lambda_{\hat{\zeta},\hat{\zeta}} - 2\Sigma_{\hat{\zeta},\hat{\zeta}}(I_n \otimes K_j^{*T}R) - 2\Sigma_{\hat{\zeta},\tau}(I_n \otimes R) - 2\Sigma_{\hat{\zeta},\tau}]$. $I_n$ and $R$ are constant matrices, and $\otimes$ is used for representing a tensor product.

3. Obtain a fourth polynomial of the second equation based on the second state variable and the fourth intermediate matrix.

For example, the fourth polynomial is denoted as $\hat{\Phi}$, and $\hat{\Phi} = -\Sigma_{\hat{\zeta},\hat{\zeta}}\text{vec}(Q + K_j^{*T}RK^*)$. Q is a constant matrix.

4. In a case that the third polynomial is equal to the fourth polynomial, solve the second equation to obtain the error linear function.

$$\widehat{\Psi}\begin{bmatrix} \text{vec}(P^*) \\ \text{vec}(K^*) \\ \text{vec}((D^T - S(\widehat{Z}))P^*) \end{bmatrix} = \widehat{\Phi}$$

For example, the second equation is solved to obtain the error linear function, that is, $S(\widehat{Z})$ in the equation.

To ensure that the second equation has a solution, an eighth intermediate matrix is determined based on the second state variable. In a case that the sixth intermediate matrix, a seventh intermediate matrix, and the eighth intermediate matrix reach full rank, step 2, to be specific, obtaining a third polynomial of a second equation based on the optimal feedback gain, the optimal variable matrix, the uncertainty degree, the fourth intermediate matrix, the fifth intermediate matrix, and the sixth intermediate matrix, is performed.

For example, the eighth intermediate matrix is denoted as $\Sigma_{\widehat{\zeta}}$. In this case, $\Sigma_{\widehat{\zeta}} =$

$\left[\int_{t_0}^{t_1} \widehat{\zeta}dt, \int_{t_1}^{t_2} \widehat{\zeta}dt, \dots, \int_{t_{s-1}}^{t_n} \widehat{\zeta}dt\right]^T$ . In a case that the sixth intermediate matrix, the seventh intermediate matrix, and the eighth intermediate matrix reach full rank, the following equation is satisfied:

$$\text{rank}\left(\left[\Sigma_{\widehat{\zeta},\zeta} , \Sigma_{\widehat{\zeta},\tau} , \Sigma_{\widehat{\zeta}} \right]\right) = \frac{n(n+1)}{2} + n(m + q) = 12, (16)$$

The fifth intermediate matrix includes a difference between a tensor product of the actual state variable and the actual state variable of a third moment and a tensor product of the actual state variable and the actual state variable of a fourth moment.

The sixth intermediate matrix includes an integral of a tensor produce of the actual state variable and the actual state variable between the third moment and the fourth moment.

The seventh intermediate matrix includes an integral of a tensor produce of the actual state variable and the torque of the two-wheeled robot between the third moment and the fourth moment.

The eighth intermediate matrix includes an integral of the actual state variable between the third moment and the fourth moment.

The third moment and the fourth moment are two different sampling values in the second time period. In some embodiments, the first moment and the third moment have the same sampling rule. In some embodiments, the second moment and the fourth moment have the same sampling rule.

**Step 508:** Obtain an angle deviation matrix and a noise deviation matrix based on the optimal feedback gain, the optimal variable matrix, the uncertainty degree, and the error linear function.

For example, the optimal feedback gain $K^*$, the optimal variable matrix $P^*$, the uncertainty degree D, and the error linear function $S(\widehat{Z})$ satisfy the following equation:

$$\begin{bmatrix} S(\widehat{Z}) & 0 & -P^*K^{*T}R \\ \widehat{Z} & -I & 0 \end{bmatrix}\begin{bmatrix} \alpha \\ Z \\ T \end{bmatrix} = \begin{bmatrix} D \\ 0 \end{bmatrix}, (17)$$

$\alpha$ is a scalar, and $\alpha$ satisfies $Z = \alpha\widehat{Z}$ and the Equation (6). $\widehat{Z} = [1\ 0\ 0]^T$ is a basis of Z. In this case, the angle deviation matrix Z and the noise deviation matrix T are determined through the foregoing equations.

**Step 509:** Obtain a system compensation value based on the optimal feedback gain, the angle deviation matrix, and the noise deviation matrix.

For example, a system compensation value $L = K^*Z + T$ is obtained based on the optimal feedback gain $K^*$, the angle deviation matrix Z, and the noise deviation matrix $T$.

**Step 510:** Obtain the control torque of the two-wheeled robot based on the optimal feedback gain, the second state variable, and the system compensation value.

For example, the control torque $\tau = -K^*\zeta + L$ of the two-wheeled robot is obtained based on the optimal feedback gain $K^*$, the second state variable $\zeta$, and the system compensation value L.

**Step 511:** Control the two-wheeled robot by using the control torque.

In some implementations, as shown in FIG. 1, torques of the motor 111, the motor 112, the motor 113, the motor 114, the motor 121, and the motor 131 are controlled by using the control torque, to enable the two-wheeled robot to remain stationary in a balance state.

In conclusion, in the embodiments of this application, the optimal feedback gain, the optimal variable matrix, and the uncertainty degree are obtained based on the first state variable and the first feedback gain of the two-wheeled robot. The angle deviation matrix and the noise deviation matrix are calculated based on the optimal feedback gain, the optimal variable matrix, the uncertainty degree, and the second state variable of the two-wheeled robot. Then the control torque of the two-wheeled robot is obtained based on the second state variable, the optimal feedback gain, the angle deviation matrix, and the noise deviation matrix. Finally, the two-wheeled robot is controlled by using the control torque. According to the method, the two-wheeled robot can keep stay in place or move within a small range, so that stability and safety of the two-wheeled robot can be improved.

In addition, a balance controller of the robot of the foregoing type may be automatically updated online, so that the foregoing robot can implement the optimal control, and keep stay in place or move within a small range. The foregoing effects improve stability and security of the two-wheeled robot, and enable the two-wheeled robot to be used in a scenario that requires a stable chassis and a precise operation.

In the embodiments of this application, the optimal solutions ($K^*$, $P^*$) and (Z, T) are needed to be determined. First, for a method to determine the optimal feedback gain $K^*$, iteratively solve an optimization problem through the collected $\zeta(1)$ and $\tau(t)$. In the embodiments of this application, dependence on A is removed through the Lyapunov equation:

$$-K_j^T R \mathrm{K_j} - Q = -A_j^T \mathrm{P_j} + \mathrm{P_j A_j}.$$

j is an iteration index. In addition, dependence on B is removed through the following gain iteration:

$$\mathrm{K_{j+1}} = R^{-1} B^T \mathrm{P_j}.$$

In each iteration process, D is set as a determined variable in each iteration, and in a case that K and P converges, convergence values are the optimal solutions $K^*$ and $P^*$.

To determine parameters Z and T, a basis of Z is defined as $\hat{Z} = [10\ 0]^T$, so that there is a scalar $\alpha$ satisfying $Z = \alpha \hat{Z}$ and Equation (6). A Sylvester mapping S: $R^n \to R^n$ is defined to map, to make S(Z)=-AZ. In this case,

$$\mathrm{S(Z)} \equiv \alpha \mathrm{S}(\hat{Z}) = \mathrm{BT} + \mathrm{D} = P^* K^{*T} R T + D.$$

B is represented by using $K^*$ and $P^*$, and D can be solved through the foregoing steps.

In a case that S(2) is provided, (Z, T) can be solved through the following equation:

$$\begin{bmatrix} \mathrm{S}(\hat{Z}) & 0 & -P^* K^{*T} R \\ \hat{Z} & -I & 0 \end{bmatrix} \begin{bmatrix} \alpha \\ Z \\ T \end{bmatrix} = \begin{bmatrix} D \\ 0 \end{bmatrix}.$$

The control torque $\tau$ is obtained by setting $L = K^*Z + T$ and $\tau = -K^*\zeta + L$.

In conclusion, the embodiments of this application provide a proof process of calculating the control torque $\tau$. A complete process of calculating the control torque can be obtained through the proof process, and provides a theoretical basis for calculating the control torque.

In the following embodiments, the two-wheeled robot control method is provided in the embodiments of this application in a form of pseudocode as follows:

1. Apply initial stability control, and $\tau = -K_0\zeta + \beta$, an exploration noise P(t) is collected in [$t_0$, $t_s$].
2. Calculate Equations (9), (10), (11), and (12) and Equations (13), (14), (15) and (16).
3. Determine that a full-rank condition holds:

$$\mathrm{rank}\left(\left[\Sigma_{\zeta,\zeta}\ ,\Sigma_{\zeta,\tau}\ ,\Sigma_{\zeta}\ \right]\right) = \frac{n(n+1)}{2} + n(m+q) = 12;$$

$$\mathrm{rank}\left(\left[\Sigma_{\hat{\zeta},\hat{\zeta}}\ ,\Sigma_{\hat{\zeta},\tau}\ ,\Sigma_{\hat{\zeta}}\ \right]\right) = \frac{n(n+1)}{2} + n(m+q) = 12.$$

4. Set j=0.

5. Set a loop, and let $\|P_{j+1}$ - $P_j\| < \varepsilon$ as a loop end condition, $\varepsilon$ being any positive real number.

6. Solve $P_j$, $K_{j+1}$, and D through the following equation:

$$\Psi \begin{bmatrix} vec(P_j) \\ vec(K_{j+1}) \\ vec(D^T P_j) \end{bmatrix} = \Phi,$$

where $\Psi = [\Lambda_{\zeta,\zeta} - 2\sum_{\zeta,\zeta}(I_n \otimes K_j^T R) - 2\sum_{\zeta,\tau}(I_n \otimes R) - 2\sum_{\xi,\tau}]$, and

$$\Phi = -\sum_{\zeta,\zeta} vec(Q + K_j^T R K_j).$$

7. End the loop.

8. Let $K^* = K_{j+1}$, and $P^* = P_j$.

9. Solve $S(\hat{Z})$ through the following equation:

$$\widehat{\Psi} \begin{bmatrix} vec(P^*) \\ vec(K^*) \\ vec((D^T - S(\hat{Z}))P^*) \end{bmatrix} = \widehat{\Phi},$$

where $\widehat{\Psi} = [\Lambda_{\hat{\zeta},\hat{\zeta}} - 2\sum_{\hat{\zeta},\hat{\zeta}}(I_n \otimes K_j^{*T} R) - 2\sum_{\hat{\zeta},\tau}(I_n \otimes R) - 2\sum_{\hat{\zeta},\tau}]$, and

$$\widehat{\Phi} = -\sum_{\hat{\zeta},\hat{\zeta}} vec(Q + K_j^{*T} R K^*).$$

10. Solve Z and T through Equation (17).

11. Let $L = K^*Z + T$, the control torque outputted by the two-wheeled robot is $\tau = -K^*\zeta + L$ in this case.

In conclusion, in the embodiments of this application, the optimal feedback gain, the optimal variable matrix, and the uncertainty degree are obtained based on the first state variable and the first feedback gain of the two-wheeled robot. The angle deviation matrix and the noise deviation matrix are calculated based on the optimal feedback gain, the optimal variable matrix, the uncertainty degree, and the second state variable of the two-wheeled robot. Then the control torque of the two-wheeled robot is obtained based on the second state variable, the optimal feedback gain, the angle deviation matrix, and the noise deviation matrix. Finally, the two-wheeled robot is controlled by using the control torque. According to the method, the two-wheeled robot can keep stay in place or move within a small range, so that stability and safety of the two-wheeled robot can be improved.

In embodiments of this application train, a controller is adjusted for optimal output driven by training data of a two-wheeled robot in four scenarios, to process uncertainties in a model and disturbance. In the related art, a two-wheeled robot can maintain balance, but cannot remain stationary, and this is a restriction in the related art. Therefore, in a first scenario and a second scenario, a stability problem which occurs in a case that a height of the robot is 0.33 m and 0.5 m is avoided. In addition, in this application, two more challenging scenarios are further provided. In a third scenario, an eccentric load of 3.5 kg is arranged at a front of a base in the robot in this application. Because a weight of a floating base is 11 kg, a heavy load significantly changes a balance point of the two-wheeled robot. In a fourth scenario, the two-wheeled robot is trained on a ramp in this application. Clearly, an additional torque is needed for the two-wheeled robot to compensate factors of a slope of a direct ramp, and this means that the balance point of the two-wheeled robot changes. Information of the load (such as quality, shape, and position) and the slope (such as gradient) are not applied during a training process, and are regarded as unknown interference.

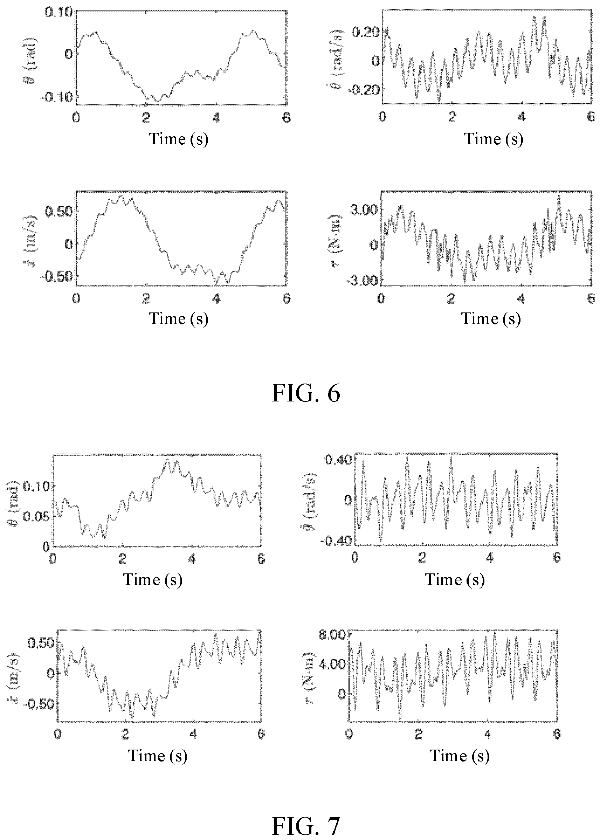

During training, an initial gain $K_0 = [-74 - 26 - 10]$ is used. In a case that the controller is in a stationary state, the two-wheeled robot can move upward/forward repeatedly under control by the controller, and an exploration noise $\beta(t) = 1.6\sin(8\pi t) + 0.8\cos(12\pi t)$ is collected for providing more information. Sufficient training data is collected in each experiment to easily satisfy a full-rank condition of this application. In addition, robustness of the method provided in the embodiments of this application ensures a small neighborhood converged to the optimal solution during the use of the noise data. FIG. 6 and FIG. 7 shows training data in a case that the robot height is 0.33 m and 0.5 m respectively, and oscillation of a curve means that exploration noise exists.

Finally, by setting $Q = \text{diag}(900, 400, 150)$, $R = 1$, and $\varepsilon = 10^{-4}$ in the method of this application, convergence is performed on control parameters of the foregoing four scenarios as shown in the following:

$$K_a^* = [-67.96 - 29.13 - 9.20], L_a = -4.21;$$

$$K_b^* = [-80.92 - 27.38 - 10.79], L_b = -1.78;$$

$$K_c^* = [-86.61 - 27.37 - 10.89], L_c = -5.97;$$

$$K_d^* = [-61.04 - 19.86 - 7.97], L_d = 1.30.$$

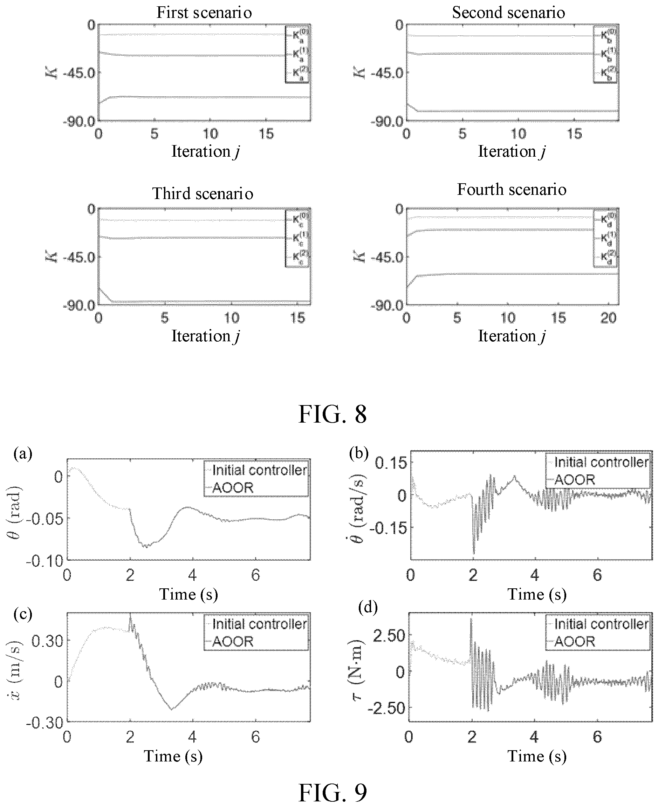

The foregoing convergence values are respectively implemented in the 19th, 18th, 16th, 21st iterations. Refer to FIG. 8. A feature of quick convergence enables an algorithm of this application to be implemented online.

Because a pitch angle of the two-wheeled robot is adjusted to be extensively large, a motor input of the two-wheeled robot is oscillating. A first diagonal term of Q is reduced accordingly in the embodiments of this application. In addition, according to a manual test, convergence property of the algorithm is sensitive to a third diagonal term, and a feasible range is 90 to 280. In addition, a second diagonal term is larger than 180, and the first diagonal term may be any positive value. These results indicate the robustness of the algorithm provided in the embodiments of this application to the convergence of the parameters Q and R.

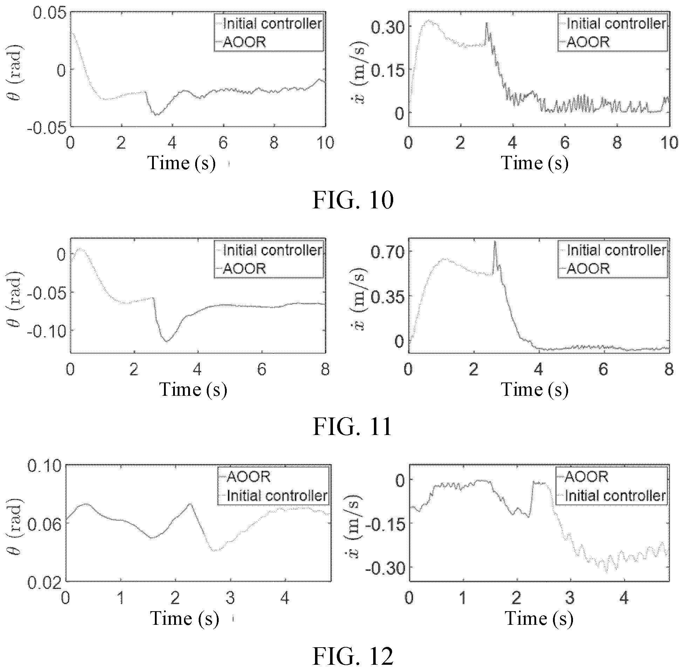

By using the algorithm of this application, a trained controller may update a motion state of the two-wheeled robot online after data collection. Here, the related art (in which the initial feedback gain $K_0$ is used to control the two-wheeled robot) is directly compared with the method provided in the embodiments of this application (also referred to as adaptive optimal output regulation (AOOR)), to avoid an impact of motion noise and exploration noise on vision during the training. In the first scenario, the height of the two-wheeled robot is 0.33 m. The related art is used first, and a remote controller is used to make the two-wheeled robot to remain stationary. Then, after the remote controller is released, the robot continuously moves forward within the first two seconds, and this can be learned from the curve shown in FIG. 9 (c). Then, by applying the method provided in the embodiments of this application at t=2 seconds, the robot decelerates sharply and maintains stationary for the next 6 seconds, as shown in the curve shown in FIG. 9 (c). To implement quick adjustment, slight oscillation exists in the motor input, but impacts on the pitch angle (referring to FIG. 9 (a)) and a linear speed (referring to FIG. 9 (c)) are acceptable. According to test data, an average speed during the AOOR is applied is much less than that during an initial situation, and a small shift is generated in a long period. A small shift generated during the use of the method provided in the embodiments of this application is caused by an initial speed converging to zero, and this is inevitable. A testing processes for the robot is similar at a height of 0.5 m and under load. According to testing data (FIG. 10 and FIG. 11), after the method provided in this application is applied, the robot decelerates and becomes stationary. A method for a slope test is similar. A difference is that the method provided in the embodiments of this application is used at the beginning, and then the related art is used for comparison. The reason is that if the related art is used at the beginning, the robot may leave the slope quickly before the method provided in the embodiments of this application is applied. Data (FIG. 12) indicates the method provided in the embodiments of this application has significant adjustment performance. Experiment results of this application and the related art are summarized in Table 1. A small shift in a long time in the method provided in the embodiments of this application indicates that the method provided in the embodiments of this application has significant adjustment performance.

Table 1 Experiment results of this application and the related art

| Experiment scenario | Related art | | Method provided in this application | |
|---|---|---|---|---|
| | Time (s) | Shift (m) | Time (s) | Shift (m) |
| First scenario | 2.0 | 0.46 | 5.8 | 0.15 |
| Second scenario | 2.9 | 0.56 | 7.1 | 0.15 |
| Third scenario | 2.5 | 1.01 | 5.4 | 0.04 |
| Fourth scenario | 2.3 | 0.42 | 2.5 | 0.10 |

The following are apparatus embodiments of this application. For details not described in the apparatus embodiments, reference is made to the foregoing method embodiments, and details are not described herein again.

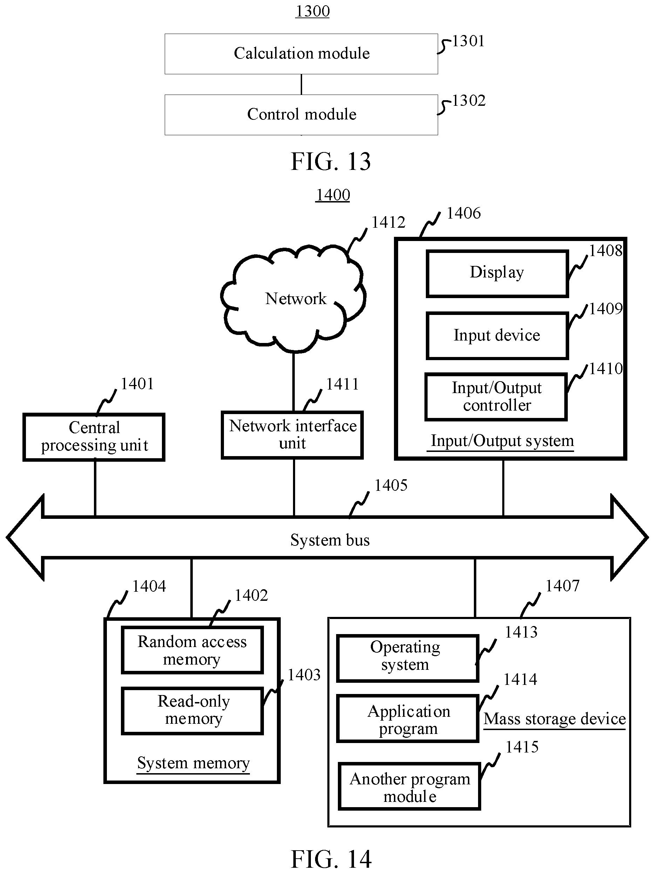

FIG. 13 is a schematic diagram of a structure of a two-wheeled robot control apparatus according to an embodiment of this application. The apparatus may be implemented as all or a part of a computer device by software, hardware, or a combination of the two. The apparatus 1300 includes an obtaining module configured to obtain a first state variable and a first feedback gain of a two-wheeled robot; and further comprises:

a calculation module 1301, configured to calculate an optimal feedback gain, an optimal variable matrix, and an uncertainty degree based on the first state variable and the first feedback gain, the optimal variable matrix representing a degree that a motion state of the two-wheeled robot affects a control mode of the two-wheeled robot;

the calculation module 1301 being further configured to calculate an angle deviation matrix and a noise deviation matrix based on the optimal feedback gain, the optimal variable matrix, the uncertainty degree, and a second state variable of the two-wheeled robot; and

the calculation module 1301 being further configured to obtain a control torque of the two-wheeled robot based on the second state variable, the optimal feedback gain, the angle deviation matrix, and the noise deviation matrix; and

a control module 1302, configured to control the two-wheeled robot by using the control torque.

In an optional design, the calculation module 1301 is further configured to: obtain a $j^{th}$ variable matrix based on the first state variable and a $(j+1)^{th}$ feedback gain, the $1^{st}$ feedback gain being the first feedback gain, j being an integer, and an initial value of j being 0; determine a $(j+2)^{th}$ feedback gain based on the $(j+1)^{th}$ feedback gain; update j into j+1, and repeat the foregoing two operations; in a case that the $j^{th}$ variable matrix reaches convergence, determine the $j^{th}$ variable matrix as the optimal variable matrix; determine the $(j+1)^{th}$ feedback gain as the optimal feedback gain; and determine the uncertainty degree based on the optimal variable matrix, the optimal feedback gain, and the first state variable.

In an optional design, the calculation module 1301 is further configured to: determine a first intermediate matrix, a second intermediate matrix, and a third intermediate matrix based on the first state variable; obtain a first polynomial of a first equation based on the $(j+1)^{th}$ feedback gain, the first intermediate matrix, the second intermediate matrix, and the third intermediate matrix; obtain a second polynomial of the first equation based on the $(j+1)^{th}$ feedback gain and the first intermediate matrix; and in a case that the first polynomial is equal to the second polynomial, solve the first equation to obtain the $j^{th}$ variable matrix.

In an optional design, the calculation module 1301 is further configured to: determine a fourth intermediate matrix based on the first state variable; and in a case that the second intermediate matrix, the third intermediate matrix, and the fourth intermediate matrix reach full rank, perform the operation of obtaining a first polynomial of a first equation based on the $(j+1)^{th}$ feedback gain, the first intermediate matrix, the second intermediate matrix, and the third intermediate matrix.

In an optional design, the first intermediate matrix includes a difference between a tensor product of the first state variable and the first state variable of a first moment and a tensor product of the first state variable and the first state variable of a second moment. The second intermediate matrix includes an integral of the tensor product of the first state variable and the first state variable between the first moment and the second moment. The third intermediate matrix

14

includes an integral of a tensor produce of the first state variable and a torque of the two-wheeled robot between the first moment and the second moment. The fourth intermediate matrix includes an integral of the first state variable between the first moment and the second moment.

In an optional design, the calculation module 1301 is further configured: to determine actual state variable based on the second state variable; obtain an error linear function based on the optimal feedback gain, the optimal variable matrix, the uncertainty degree, and the actual state variable; and obtain the angle deviation matrix and the noise deviation matrix based on the optimal feedback gain, the optimal variable matrix, the uncertainty degree, and the error linear function.

In an optional design, the calculation module 1301 is further configured to: determine the fourth intermediate matrix, a fifth intermediate matrix, and a sixth intermediate matrix based on the actual state variable; obtain a third polynomial of a second equation based on the optimal feedback gain, the optimal variable matrix, the uncertainty degree, the fourth intermediate matrix, the fifth intermediate matrix, and the sixth intermediate matrix; obtain a fourth polynomial of the second equation based on the actual state variable and the fourth intermediate matrix; and in a case that the third polynomial is equal to the fourth polynomial, solve the second equation to obtain the error linear function.

In an optional design, the calculation module 1301 is further configured to: determine an eighth intermediate matrix based on the actual state variable; in a case that the sixth intermediate matrix, a seventh intermediate matrix, and the eighth intermediate matrix reach full rank, perform the operation of obtaining a third polynomial of a second equation based on the optimal feedback gain, the optimal variable matrix, the uncertainty degree, the fourth intermediate matrix, the fifth intermediate matrix, and the sixth intermediate matrix.

In an optional design, the fifth intermediate matrix includes a difference between a tensor product of the second state variable and the second state variable of a third moment and a tensor product of the second state variable and the second state variable of a fourth moment. The sixth intermediate matrix includes an integral of a tensor produce of the second state variable and the second state variable between the third moment and the fourth moment. The seventh intermediate matrix includes an integral of a tensor product of the second state variable and the torque of the two-wheeled robot between the third moment and the fourth moment. The eighth intermediate matrix includes an integral of the second state variable between the third moment and the fourth moment.

In an optional design, the calculation module 1301 is further configured to: obtain a system compensation value based on the optimal feedback gain, the angle deviation matrix, and the noise deviation matrix; and obtain the control torque of the two-wheeled robot based on the optimal feedback gain, the second state variable, and the system compensation value.

In conclusion, in the embodiments of this application, the optimal feedback gain, the optimal variable matrix, and the uncertainty degree are obtained based on the first state variable and the first feedback gain of the two-wheeled robot. The angle deviation matrix and the noise deviation matrix are calculated based on the optimal feedback gain, the optimal variable matrix, the uncertainty degree, and the second state variable of the two-wheeled robot. Then the control torque of the two-wheeled robot is obtained based on the second state variable, the optimal feedback gain, the angle deviation matrix, and the noise deviation matrix. Finally, the two-wheeled robot is controlled by using the control torque. According to the method, the two-wheeled robot can keep stay in place or move within a small range, so that stability and safety of the two-wheeled robot can be improved.

FIG. 14 is a schematic diagram of a structure of a controller according to an exemplary embodiment. A computer device 1400 includes a central processing unit (CPU) 1401, a system memory 1404 including a random access memory (RAM) 1402 and a read-only memory (ROM) 1403, and a system bus 1405 connecting the system memory 1404 and the central processing unit 1401. The computer device 1400 further includes a basic input/output system (I/O system) 1406 assisting in transmitting information between components in the computer device, and a mass storage device 1407 configured to store an operating system 1413, an application program 1414, and another program module 1415.

The basic input/output system 1406 includes a display 1408 configured to display information and an input device 1409 such as a mouse or a keyboard configured to input information by a user. The display 1408 and the input device 1409 are both connected to the central processing unit 1401 by using an input/output controller 1410 connected to the system bus 1405. The basic input/output system 1406 may further include the input/output controller 1410 to be configured to receive and process inputs from a plurality of other devices such as a keyboard, a mouse, and an electronic stylus. Similarly, the input/output controller 1410 further provides an output to a display screen, a printer, or another type of output device.

The mass storage device 1407 is connected to the central processing unit 1401 by using a mass storage controller (not shown) connected to the system bus 1405. The mass storage device 1407 and a computer device-readable medium associated with the mass storage device provide non-volatile storage to the computer device 1400. To be specific, the mass storage device 1407 may include a computer device-readable medium (not shown) such as a hard disk or a compact disc read-only memory (CD-ROM) drive.

In general, the computer device-readable medium may include a computer device storage medium and a communication medium. The computer device storage medium includes volatile and non-volatile media, and removable and non-removable media implemented by using any method or technology used for storing information such as computer device-readable instructions, data structures, program modules, or other data. The computer device storage medium includes a RAM, a ROM, an erasable programmable read-only memory (EPROM), an electrically erasable programmable read-only memory (EEPROM), a CD-ROM, a digital versatile disc (DVD) or another optical storage, a magnetic cassette, a magnetic tape, a disk storage, or another magnetic storage device. Certainly, a person skilled in the art may know that the computer device storage medium is not limited to the foregoing several types. The system memory 1404 and the mass storage device 1407 may be collectively referred to as a memory.

According to the embodiments of the present disclosure, the computer device 1400 may alternatively be connected, through a network such as the Internet, to a remote computer device on the network and run. To be specific, the computer device 1400 may be connected to a network 1411 by using a network interface unit 1412 connected to the system bus 1405, or may be connected to another type of network or a remote computer device system (not shown) by using a network interface unit 1412.

The memory further includes one or more programs. The one or more programs are stored in a memory. The central processing unit 1401 implements all or some steps of the two-wheeled robot control method by executing the one or more programs.

In addition, an embodiment of this application further provides a storage medium, the storage medium being configured to store a computer program, and the computer program being used for performing the two-wheeled robot control method according to the foregoing embodiments.

An embodiment of this application further provides a computer program product including a computer program, the computer program product, when running on a computer, causing the computer to perform the two-wheeled robot control method according to the foregoing embodiments.

The sequence numbers of the foregoing embodiments of this application are merely for description purpose but do not imply the preference among the embodiments.

A person of ordinary skill in the art may understand that all or some of the steps of the foregoing embodiments may be implemented by hardware, or may be implemented by a program instructing relevant hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made within the spirit and principle of this application fall within the protection scope of this application.

## Claims

1. A two-wheeled robot control method, executable by a control unit, the method comprising:

   obtaining a first state variable and a first feedback gain of a two-wheeled robot;
   calculating an optimal feedback gain, an optimal variable matrix, and an uncertainty degree based on the first state variable and the first feedback gain, the optimal variable matrix representing a degree that a motion state of the two-wheeled robot affects a control mode of the two-wheeled robot;
   calculating an angle deviation matrix and a noise deviation matrix based on the optimal feedback gain, the optimal variable matrix, the uncertainty degree, and a second state variable of the two-wheeled robot;
   obtaining a control torque of the two-wheeled robot based on the second state variable, the optimal feedback gain, the angle deviation matrix, and the noise deviation matrix; and
   controlling the two-wheeled robot by using the control torque.

2. The method according to claim 1, wherein the calculating an optimal feedback gain, an optimal variable matrix, and an uncertainty degree based on a first state variable and a first feedback gain of a two-wheeled robot comprises:

   obtaining a $j^{th}$ variable matrix based on the first state variable and a $(j+1)^{th}$ feedback gain, a $1^{st}$ feedback gain being the first feedback gain, j being an integer, and an initial value of j being 0;
   determining a $(j+2)^{th}$ feedback gain based on the $(j+1)^{th}$ feedback gain;
   updating j into j+1, and repeating the foregoing two operations;
   in a case that the $j^{th}$ variable matrix reaches convergence, determining the $j^{th}$ variable matrix as the optimal variable matrix; and determining the $(j+1)^{th}$ feedback gain as the optimal feedback gain; and
   determining the uncertainty degree based on the optimal variable matrix, the optimal feedback gain, and the first state variable.

3. The method according to claim 2, wherein the obtaining a $j^{th}$ variable matrix based on the first state variable and a $(j+1)^{th}$ feedback gain comprises:

   determining a first intermediate matrix, a second intermediate matrix, and a third intermediate matrix based on the first state variable;
   obtaining a first polynomial of a first equation based on the $(j+1)^{th}$ feedback gain, the first intermediate matrix, the second intermediate matrix, and the third intermediate matrix;
   obtaining a second polynomial of the first equation based on the $(j+1)^{th}$ feedback gain and the first intermediate matrix; and
   in a case that the first polynomial is equal to the second polynomial, solving the first equation to obtain the $j^{th}$ variable matrix.

4. The method according to claim 3, further comprising:

   determining a fourth intermediate matrix based on the first state variable; and
   in a case that the second intermediate matrix, the third intermediate matrix, and the fourth intermediate matrix reach full rank, performing the operation of obtaining a first polynomial of a first equation based on the $(j+1)^{th}$ feedback gain, the first intermediate matrix, the second intermediate matrix, and the third intermediate matrix.

5. The method according to claim 4, wherein the first intermediate matrix comprises a difference between a tensor product of the first state variable and the first state variable of a first moment and a tensor product of the first state variable and the first state variable of a second moment;

   the second intermediate matrix comprises an integral of the tensor product of the first state variable and the first variable between the first moment and the second moment;
   the third intermediate matrix comprises an integral of a tensor product of the first state variable and a torque of the two-wheeled robot between the first moment and the second moment; and
   the fourth intermediate matrix comprises an integral of the first state variable between the first moment and the second moment.

6. The method according to any one of claims 1 to 5, wherein the calculating an angle deviation matrix and a noise deviation matrix based on the optimal feedback gain, the optimal variable matrix, the uncertainty degree, and a second state variable comprises:

   determining an actual state variable based on the second state variable;
   obtaining an error linear function based on the optimal feedback gain, the optimal variable matrix, the uncertainty degree, and the actual state variable; and
   obtaining the angle deviation matrix and the noise deviation matrix based on the optimal feedback gain, the optimal variable matrix, the uncertainty degree, and the error linear function.

7. The method according to claim 6, the obtaining an error linear function based on the optimal feedback gain, the optimal variable matrix, the uncertainty degree, and the actual state variable comprises:

   determining the fourth intermediate matrix, a fifth intermediate matrix, and a sixth intermediate matrix based on the actual state variable;
   obtaining a third polynomial of a second equation based on the optimal feedback gain, the optimal variable matrix, the uncertainty degree, the fourth intermediate matrix, the fifth intermediate matrix, and the sixth intermediate matrix;
   obtaining a fourth polynomial of the second equation based on the actual state variable and the fourth intermediate matrix; and
   in a case that the third polynomial is equal to the fourth polynomial, solving the second equation to obtain the error linear function.

8. The method according to claim 7, further comprising:

   determining an eighth intermediate matrix based on the actual state variable; and
   in a case that the sixth intermediate matrix, a seventh intermediate matrix, and the eighth intermediate matrix reach full rank, performing the operation of obtaining a third polynomial of a second equation based on the optimal feedback gain, the optimal variable matrix, the uncertainty degree, the fourth intermediate matrix, the fifth intermediate matrix, and the sixth intermediate matrix.

9. The method according to claim 8, wherein

the fifth intermediate matrix comprises a difference between a tensor product of the actual state variable and the actual state variable of a third moment and a tensor product of the actual state variable and the actual state variable of a fourth moment;
the sixth intermediate matrix comprises an integral of a tensor product of the actual state variable and the actual state variable between the third moment and the fourth moment;
the seventh intermediate matrix comprises an integral of a tensor product of the actual state variable and the torque of the two-wheeled robot between the third moment and the fourth moment; and
the eighth intermediate matrix comprises an integral of the actual state variable between the third moment and the fourth moment.

10. The method according to any one of claims 1 to 9, wherein the obtaining a control torque of the two-wheeled robot based on the second state variable, the optimal feedback gain, the angle deviation matrix, and the noise deviation matrix comprises:

obtaining a system compensation value based on the optimal feedback gain, the angle deviation matrix, and the noise deviation matrix; and
obtaining the control torque of the two-wheeled robot based on the optimal feedback gain, the second state variable, and the system compensation value.

11. A two-wheeled robot control apparatus, comprising:

an obtaining module, configured to obtain a first state variable and a first feedback gain of a two-wheeled robot;
a calculation module, configured to calculate an optimal feedback gain, an optimal variable matrix, and an uncertainty degree based on the first state variable and the first feedback gain, the optimal variable matrix representing a degree that a motion state of the two-wheeled robot affects a control mode of the two-wheeled robot;
the calculation module being further configured to calculate an angle deviation matrix and a noise deviation matrix based on the optimal feedback gain, the optimal variable matrix, the uncertainty degree, and a second state variable of the two-wheeled robot; and
the calculation module being further configured to obtain a control torque of the two-wheeled robot based on the second state variable, the optimal feedback gain, the angle deviation matrix, and the noise deviation matrix; and
a control module, configured to control the two-wheeled robot by using the control torque.

12. A robot, comprising a processor configured to load and execute a computer program to implement the two-wheeled robot control method according to any one of claims 1 to 10.

13. A computer-readable storage medium, having a computer program stored thereon, the computer program being loaded and executed by a processor to implement the two-wheeled robot control method according to any one of claims 1 to 10.

14. A chip product, comprising a computer program or instructions, the computer program or the instructions, when executed by a processor, implementing the two-wheeled robot control method according to any one of claims 1 to 10.

15. A computer program product comprising a computer program, the computer program product, when running on a computer, causing the computer to perform the two-wheeled robot control method according to any one of claims 1 to 10.

FIG. 1

FIG. 2

Obtain a first state variable and a first feedback gain of a two-wheeled robot, and calculate an optimal feedback gain, an optimal variable matrix, and an uncertainty degree based on the first state variable and the first feedback gain, the optimal variable matrix representing a degree a state of the two-wheeled robot affects a control mode of the two-wheeled robot

302

Calculate an angle deviation matrix and a noise deviation matrix based on the optimal feedback gain, the optimal variable matrix, the uncertainty degree, and a second state variable of the two-wheeled robot

304

Obtain a control torque of the two-wheeled robot based on the second state variable, the optimal feedback gain, the angle deviation matrix, and the noise deviation matrix

306

Control the two-wheeled robot by using the control torque

308

FIG. 3

401 402

FIG. 4

Obtain a $j^{th}$ variable matrix based on a first state variable and a $(j+1)^{th}$ feedback gain ⟿ 501

Determine a $(j+2)^{th}$ feedback gain based on the $(j+1)^{th}$ feedback gain ⟿ 502

Update j into j+1, and repeat the foregoing two operations ⟿ 503

In a case that the $j^{th}$ variable matrix reaches convergence, determine the $j^{th}$ variable matrix as an optimal variable matrix; and determine the $(j+1)^{th}$ feedback gain as an optimal feedback gain ⟿ 504

Determine an uncertainty degree based on the optimal variable matrix, the optimal feedback gain, and the first state variable ⟿ 505

Determine an actual state variable based on a second state variable ⟿ 506

Obtain an error linear function based on the optimal feedback gain, the optimal variable matrix, the uncertainty degree, and the actual state variable ⟿ 507

Obtain an angle deviation matrix and a noise deviation matrix based on the optimal feedback gain, the optimal variable matrix, the uncertainty degree, and the error linear function ⟿ 508

Obtain a system compensation value based on the optimal feedback gain, the angle deviation matrix, and the noise deviation matrix ⟿ 509

Obtain a control torque of a two-wheeled robot based on the optimal feedback gain, the second state variable, and the system compensation value ⟿ 510

Control the two-wheeled robot by using the control torque ⟿ 511

FIG. 5

FIG. 6

FIG. 7

FIG. 8

FIG. 9

FIG. 10

FIG. 11

FIG. 12

1300

| Calculation module | 1301 |
| Control module | 1302 |

FIG. 13

1400

1412

1406

Network

Display 1408

Input device 1409

Input/Output controller 1410

Input/Output system

1401

1411

Central processing unit

Network interface unit

1405

System bus

1404 1402

1407

Random access memory

Operating system 1413

1403

Application program 1414

Mass storage device

Read-only memory

Another program module 1415

System memory

FIG. 14

## INTERNATIONAL SEARCH REPORT

| | International application No. |
|---|---|
| | **PCT/CN2023/120933** |

**A. CLASSIFICATION OF SUBJECT MATTER**

G05D1/02(2020.01)i

According to International Patent Classification (IPC) or to both national classification and IPC

**B. FIELDS SEARCHED**

Minimum documentation searched (classification system followed by classification symbols)

IPC: G05D

Documentation searched other than minimum documentation to the extent that such documents are included in the fields searched

Electronic data base consulted during the international search (name of data base and, where practicable, search terms used)

CNABS; CNTXT; CNKI; WPABSC; ENTXTC; WPABS; VEN; ENTXT: 腾讯科技(深圳)有限公司, 轮足, 轮腿, 两足, 双足, 机器人, 运动, 俯仰角, 线速度, 增益, 矩阵, 偏差, 噪音, 噪声, 干扰, 环境, 力矩, 站立, 静止, robot, wheel, foot, sport, pitch, angle, linear velocity, gain, matrix, deviation, noise, interference, torque, static, motionless

**C. DOCUMENTS CONSIDERED TO BE RELEVANT**

| Category* | Citation of document, with indication, where appropriate, of the relevant passages | Relevant to claim No. |
|---|---|---|
| X | CN 114764241 A (TENCENT TECHNOLOGY (SHENZHEN) CO., LTD.) 19 July 2022 (2022-07-19)<br> description, paragraphs [0004]-[0164], and figures 1-12 | 1-3, 6, 7, 10-15 |
| A | CN 114791729 A (TENCENT TECHNOLOGY (SHENZHEN) CO., LTD.) 26 July 2022 (2022-07-26)<br> entire document | 1-15 |
| A | CN 113752250 A (TENCENT TECHNOLOGY (SHENZHEN) CO., LTD.) 07 December 2021 (2021-12-07)<br> entire document | 1-15 |
| A | CN 112965508 A (BEIJING INSTITUTE OF TECHNOLOGY) 15 June 2021 (2021-06-15)<br> entire document | 1-15 |
| A | CN 113753150 A (TENCENT TECHNOLOGY (SHENZHEN) CO., LTD.) 07 December 2021 (2021-12-07)<br> entire document | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 November 2023** | **11 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120933**

| Patent document cited in search report | | | Publication date (day/month/year) | Patent family member(s) | Publication date (day/month/year) |
|---|---|---|---|---|---|
| CN | 114764241 | A | 19 July 2022 | None | |
| CN | 114791729 | A | 26 July 2022 | None | |
| CN | 113752250 | A | 07 December 2021 | None | |
| CN | 112965508 | A | 15 June 2021 | None | |
| CN | 113753150 | A | 07 December 2021 | None | |

Form PCT/ISA/210 (patent family annex) (July 2022)

**EP 4 418 065 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211208634